# EUROPÄISCHE PATENTANMELDUNG

(11) **EP 2 045 898 A1**
(43) Veröffentlichungstag der Anmeldung: **08.04.2009**
(21) Anmeldenummer: 07291209.0
(22) Anmeldetag: 04.10.2007
(51) Int. Cl.: H02K 3/14, H02K 3/32, H01F 27/32

(54) **Elektrischer Drilleiter**

(71) Anmelder: Essex Europe SAS, 60200 Compiègne (FR)
(72) Erfinder: Tilner, Siegbort, Dipl.-Ing., 57339 Erndtebrück (DE)
(74) Vertreter: Döring, Roger

(57) **Zusammenfassung**

Es wird ein elektrischer Drilleiter angegeben, der aus zwei nebeneinander liegenden Stapeln (8,9) von jeweils mehreren, übereinander angeordneten und gegeneinander isolierten flachen elektrischen Teilleitern (7) mit rechteckigem Querschnitt besteht. Auf der ganzen Länge des Drilleiters sind mit ständiger Fortführung Teilleiter eines ersten Stapels durch Abkröpfen in den anderen Stapel und nach vorgegebener Strecke wieder zurück in den ersten Stapel geführt. Für eine vereinfachte Bearbeitung verlaufen die Teilleiter (7) zumindest an ihrem einen Ende über eine ausreichende Länge (L) ohne Abkröpfung geradlinig.

## Beschreibung

Die Erfindung bezieht sich auf einen elektrischen Drilleiter, bestehend aus zwei nebeneinander liegenden Stapeln von jeweils mehreren, übereinander angeordneten und gegeneinander isolierten flachen elektrischen Teilleitern mit rechteckigem Querschnitt, bei welchem auf seiner ganzen Länge mit ständiger Fortführung Teilleiter eines ersten Stapels durch Abkröpfen in den anderen Stapel und nach vorgegebener Strecke wieder zurück in den ersten Stapel geführt sind (EP 1 079 500 A1).

Derartige, aus der EP 1 079 500 A1 bekannte Drilleiter werden zur Herstellung von Wicklungen für elektrische Geräte, wie beispielsweise und insbesondere Transformatoren, benötigt. Sie werden im Herstellerwerk in großer Länge von beispielsweise 5000 m gefertigt und auf Spulen aufgewickelt. Am Montageort wird der Drilleiter von der Spule abgewickelt und zu einer Wicklung verarbeitet. Um elektrische und magnetische Einflüsse auf den Drilleiter bei elektrisch aktiver Wicklung möglichst gering zu halten, wird auf der ganzen Länge des Drilleiters bei dessen Herstellung eine ständig fortschreitende Lagevertauschung der Teilleiter im Gesamtquerschnitt desselben durchgeführt, indem jeweils der in einem Stapel oben liegende und der im anderen Stapel unten liegende Teilleiter durch Abkröpfen in den jeweils anderen Stapel geführt wird. Die aus dem Drilleiter gefertigte Wicklung wird am Einsatzort mit anderen Teilen elektrisch leitend verbunden. Dazu müssen die Teilleiter an ihren Enden aus ihrer Stapelstruktur gelöst und für eine weitere Bearbeitung vorbereitet werden. Dabei sind die Teilleiter auch zu einem Leiter elektrisch leitend miteinander zu verbinden. Nach fertig gestellter Bearbeitung müssen die Teilleiter wieder in ihre Position in den Stapeln des Drilleiters zurückgebracht werden.

Der Erfindung liegt die Aufgabe zugrunde, den eingangs geschilderten Drilleiter so zu gestalten, daß das Ende einer daraus gefertigten Wicklung auf einfache Weise bearbeitet werden kann.

Diese Aufgabe wird gemäß der Erfindung dadurch gelöst, daß die Teilleiter zumindest an ihrem einen Ende über eine zur Bearbeitung, vorzugsweise zur elektrischen Kontaktierung, ausreichende Länge ohne Abkröpfung geradlinig verlaufen.

Dieser Drilleiter ist so aufgebaut, daß eine daraus hergestellte Wicklung sehr einfach elektrisch kontaktiert werden kann. Es brauchen dazu nur die geradlinig verlaufenden Enden der Teilleiter abisoliert und elektrisch leitend zu einem Leiter miteinander verbunden zu werden. Das kann grundsätzlich vollautomatisch durchgeführt werden. Die geradlinig verlaufenden Teilleiter lassen sich nach ihrer Bearbeitung problemlos in ihre Position in den Stapeln des Drilleiters zusammenlegen. Der als einheitlicher Leiter vorliegende Drilleiter kann in üblicher Technik mit elektrischen Anschlüssen versehen oder auf beliebige andere Art und Weise elektrisch kontaktiert werden. Für alle entsprechenden Arbeitsgänge braucht in die Wicklung selbst nicht eingegriffen zu werden. Die Teilleiter behalten ihre Position in der Wicklung unverändert bei.

Die Teilleiter verlaufen mindestens an einem Ende des Drilleiters geradlinig. Am anderen Ende desselben kann bei entsprechender Ausführung von anzuschließenden elektrischen Teilen gegebenenfalls auf den geradlinigen Verlauf verzichtet werden.

Der geradlinige Bereich der Teilleiter hat mit Vorteil eine Mindestlänge von 0,20 m. Er kann gegebenenfalls auch bis zu 2,00 m lang sein.

Ein Ausführungsbeispiel des Erfindungsgegenstandes ist in den Zeichnungen dargestellt.

Es zeigen:
Fig. 1 in schematischer Darstellung ein elektrisches Gerät mit einer aus einem Drilleiter gefertigten Wicklung.
Fig. 2 das Ende eines Drilleiters nach der Erfindung.

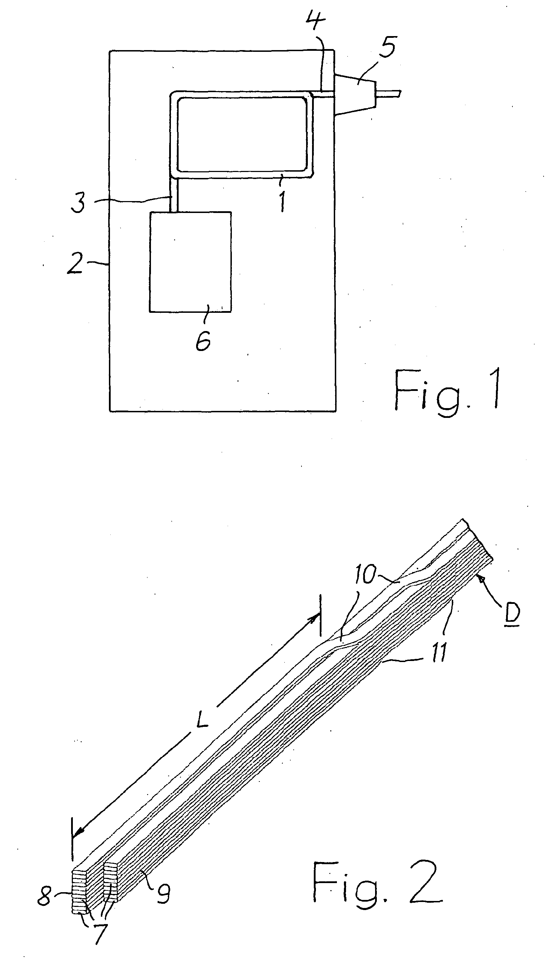

Ein Drilleiter D, dessen Ende in Fig. 2 dargestellt ist, ist zu einer elektrischen Windung 1 verarbeitet, die beispielsweise in einem Transformator 2 angeordnet ist. Die Wicklung 1 hat zwei Enden 3 und 4, an denen der Drilleiter D elektrisch leitend an andere Teile angeschlossen ist. Das kann beispielsweise eine Durchführung 5 einerseits und eine Kontakteinheit 6 andererseits sein.

Der Drilleiter D besteht aus flachen, gegeneinander isolierten elektrischen Teilleitern 7 mit rechteckigem Querschnitt, die in zwei Stapeln 8 und 9 nebeneinander angeordnet sind. Sie bestehen beispielsweise aus Kupfer oder Aluminium. Während der Herstellung des Drilleiters D findet mit ständiger Fortführung ein Platzwechsel der Teilleiter 7 vom Stapel 8 zum Stapel 9 einerseits und vom Stapel 9 zum Stapel 8 andererseits statt. Dazu wird an den entsprechenden Platzwechsel-Stellen 10 der jeweils oben liegende Teilleiter 7 des ersten Stapels, hier der Stapel 8, so abgekröpft, daß er oben auf dem zweiten Stapel, hier der Stapel 9, zu liegen kommt. Gleichzeitig wird an den Platzwechsel-Stellen 11 der jeweils unten liegende Teilleiter 7 des zweiten Stapels so abgekröpft, daß er die untere Position im ersten Stapel einnimmt.

Bei dem Drilleiter D nach der Erfindung verlaufen die Enden der Teilleiter 7 zumindest an einem Ende desselben geradlinig, und zwar auf einer Länge L, die vorzugsweise zwischen 0,20 m und 2,00 m liegt. Im Bereich der Länge L weist der Drilleiter D also keine Platzwechsel-Stellen bzw. Abkröpfungen auf, so daß seine Teilleiter im oben geschilderten Sinne besonders einfach bearbeitet und in ihre Positionen in den Stapeln des Drilleiters zurückgeführt werden können.

## Patentansprüche

1. Elektrischer Drilleiter, bestehend aus zwei nebeneinander liegenden Stapeln von jeweils mehreren, übereinander angeordneten und gegeneinander isolierten flachen elektrischen Teilleitern mit rechteckigem Querschnitt, bei welchem auf seiner ganzen Länge mit ständiger Fortführung Teilleiter eines ersten Stapels durch Abkröpfen in den anderen Stapel und nach vorgegebener Strecke wieder zurück in den ersten Stapel geführt sind, **dadurch gekennzeichnet, daß** die Teilleiter (7) zumindest an ihrem einen Ende über eine zur Bearbeitung, vorzugsweise zu elektrischen Kontaktierung, ausreichende Länge (L) ohne Abkröpfung geradlinig verlaufen.

2. Drilleiter nach Anspruch 1, **dadurch gekennzeichnet, daß** die Teilleiter (7) an ihren Enden über eine Länge (L) von mindestens 0,20 m geradlinig verlaufen.

3. Drilleiter nach Anspruch 1 oder 2, **dadurch gekennzeichnet, daß** die Teilleiter (7) an beiden Enden des Drilleiters (D) geradlinig verlaufen.

## Geänderte Patentansprüche

### Geänderte Patentansprüche gemäss Regel 137(2) EPÜ.

**1.** Elektrischer Drilleiter für Wicklungen von Transformatoren, bestehend aus zwei nebeneinander liegenden Stapeln von jeweils mehreren, übereinander angeordneten und gegeneinander isolierten flachen elektrischen Teilleitern mit rechteckigem Querschnitt, bei welchem auf seiner ganzen Länge mit ständiger Fortführung Teilleiter eines ersten Stapels durch Abkröpfen in den anderen Stapel und nach vorgegebener Strecke wieder zurück in den ersten Stapel geführt sind, **dadurch gekennzeichnet, daß** die Teilleiter (7) zumindest an ihrem einen Ende über eine zur Bearbeitung, vorzugsweise zur elektrischen Kontaktierung, ausreichende Länge (L) von mindestens 0,20 m ohne Abkröpfung geradlinig verlaufen.

**2.** Drilleiter nach Anspruch 1, **dadurch gekennzeichnet, daß** die Teilleiter (7) an beiden Enden des Drilleiters (D) geradlinig verlaufen.
